# EUROPÄISCHE PATENTSCHRIFT

(11) **EP 2 200 256 B1**
(45) Veröffentlichungstag und Bekanntmachung des Hinweises auf die Patenterteilung: **25.04.2012**
(21) Anmeldenummer: 09179467.7
(22) Anmeldetag: 16.12.2009
(51) Int. Cl.: H04L 29/08, G06F 17/30

(54) **Verfahren zur Steuerung einer interaktiven Multimedia-Webapplikation**
Method for controlling an interactive multimedia web application
Procédé de commande d'une application Web multimédia interactive

(30) Priorität: 16.12.2008 DE 102008062240
(43) Veröffentlichungstag der Anmeldung: 23.06.2010
(73) Patentinhaber: .dotkomm rich media solutions GmbH, 50823 Köln (DE); Materna GmbH Information & Communications, 44141 Dortmund (DE)
(72) Erfinder: Pispers, Ralf, 50859 Köln (DE); Gregus, Ingo, 50968 Köln (DE); Heller, Christian, 44225 Dortmund (DE); Welge, Carsten, 58454 Witten (DE)
(74) Vertreter: von Kreisler Selting Werner

(56) Entgegenhaltungen:
- WO-A1-2006/094830
- US-A1- 2005 108 574
- GIOVANNI FRATTINI ET AL: "Mobile multimodal applications on mass-market devices: experiences" DATABASE AND EXPERT SYSTEMS APPLICATIONS, 2007. DEXA '07. 18TH INTERNATIONAL CONFERENCE ON, IEEE, PISCATAWAY, NJ, USA, 1. September 2007 (2007-09-01), Seiten 89-93, XP031136424 ISBN: 978-0-7695-2932-5
- GIOVANNI FRATTINI ET AL: "Beyond web 2.0: enabling multimodal web interactions using VoIP and Ajax" SECURITY AND PRIVACY IN COMMUNICATIONS NETWORKS AND THE WORKSHOPS, 2007. SECURECOMM 2007. THIRD INTERNATIONAL CONFERENCE ON, IEEE, PISCATAWAY, NJ, USA, 17. September 2007 (2007-09-17), Seiten 89-97, XP031276527 ISBN: 978-1-4244-0974-7
- JIM-MIN LIN ET AL: "Software Integration for Applications with Audio Stream" INTELLIGENT INFORMATION HIDING AND MULTIMEDIA SIGNAL PROCESSING, 2008. IIHMSP '08 INTERNATIONAL CONFERENCE ON, IEEE, PISCATAWAY, NJ, USA, 15. August 2008 (2008-08-15), Seiten 1126-1129, XP031310262 ISBN: 978-0-7695-3278-3
- "System for Multicall Session Management" IP.COM JOURNAL, IP.COM INC., WEST HENRIETTA, NY, US, 2. Juni 2006 (2006-06-02), XP013114275 ISSN: 1533-0001

## Beschreibung

Die Erfindung betrifft ein Verfahren zur Steuerung einer interaktiven Multimedia-Webapplikation.

Aus "Das Web-Serverbuch" ist bekannt, dass in Datennetzwerken, wie beispielsweise im Internet, auf Webseiten Bilder, Text und Graphiken dargeboten werden. Der Informationsgehalt von Webseiten wird erhöht, indem zusätzlich Ton über das Datennetzwerk, insbesondere das Internet, übermittelt wird und ferner Animationen der Bilder vorgenommen werden.

Um derartige Multimediainhalte darzustellen, ist es bekannt, einzelne Fenster oder gesamte Internetseiten in Flash® zu programmieren. Bei Flash® handelt es sich um eine Software der Firma Adobe®. Mit Hilfe von Flash® ist es möglich, unterschiedliche Objekte, bei denen es sich um Bilder, Texte, Animationen, Ton, Video etc. handeln kann, über das Internet zu übertragen.

Ferner ermöglicht eine in Flash® programmierte Internetseite eine Interaktion zwischen der Internetseite und einem die Internetseite aufrufenden Client auf einem Client-device, so dass der Benutzer des Client-device mit der Internetseite interagieren bzw. die auf der Internetseite hinterlegten Inhalte steuern kann.

Zur Steuerung derartiger interaktiver Multimedia-Webapplikationen ist es möglich, über die herkömmlichen Eingabegeräte wie Tastatur oder Maus Befehle einzugeben, die die interaktive Multimedia-Webapplikation steuern oder verändern.

Ferner gibt es in den letzten Jahren die Entwicklung, Computer, beispielsweise ein Client-device, neben der Steuerung über herkömmliche Eingabegeräte, wie beispielsweise Tastatur oder Maus, auch über eine Spracheingabe zu steuern. Dazu wird auf dem Computer eine Spracherkennungssoftware installiert, die die eingegebenen Sprachbefehle erkennt und in für den Computer verständliche Befehle umwandelt.

Interaktive Multimedia-Webapplikationen, beispielsweise eine Flashapplikation, werden jedoch auf einem von einem Client-device entfernt angeordneten Webserver ausgeführt, der in Abhängigkeit von der Steuerung oder Interaktion mit dem Client Daten an das Client-device übermittelt. Eine Sprachsteuerung dieser interaktiven Multimedia-Webapplikation ist daher über das Client-device nur bedingt möglich.

Aus GIOVANNI FRATTINI ET AL: "Mobile multimodal applications on massmarket devices: experiences", DATABASE AND EXPERT SYSTEMS APPLICATIONS, 2007. DEXA '07. 18TH INTERNATIONAL CONFERENCE ON, IEEE, PISCATAWAY, NJ, USA, 1. September 2007 (2007-09-01), Seiten 89-93, ist eine experimentelle Systemarchitektur bekannt, bei der ein Client-device mit einem Webserver interagiert. Dabei wird eine interaktive Multimedia-Webapplikation auf dem Webserver ausgeführt. Über den Client-device können herkömmliche Benutzereingaben und Spracheingaben an den Webserver übermittelt werden. Aus diesem Versuchsbericht geht jedoch nicht hervor, wie ein kommerziell nutzbares System mit mehreren Clients, die gleichzeitig mit dem Webserver interagieren, aufgebaut sein soll.

Aus GIOVANNI FRATTINI ET AL: "Beyond web 2.0: 1-15 enabling multimodal web interactions using VoIP and Ajax", SECURITY AND PRIVACY IN COMMUNICATIONS NETWORKS AND THE WORKSHOPS, 2007. SECURECOMM 2007. THIRD INTERNATIONAL CONFERENCE ON, IEEE, PISCATAWAY, NJ, USA, 17. September 2007 (2007-09-17), Seiten 89-97, ist ein weiteres Verfahren bekannt, bei der über Voice-over-IP mit einer Multimedia-Webapplikation interagiert wird.

Dabei muss sich der Nutzer über eine Internetseite und einen "multimodal agent" über Nutzerkennungen einloggen. Die Interaktion erfolgt somit über zwei unterschiedliche Mittel, wobei der Nutzer durch die Eingabe der Nutzerkennungen selbst aktiv werden muss. Bei derartigen Verfahren treten mehrere Probleme auf, wie beispielsweise die Zuordnung der einzelnen Einlogmechanismen zueinander.

Aus US 2005/108 574 A1 ist eine Kommunikationsinfrastruktur zwischen einem Client-device und einer Webapplikation bekannt. Dabei kann die Kommunikation über zwei unterschiedliche Eingabemethoden erfolgen, wobei jeweils nur eine Eingabemethode aktiv ist. Durch einen Nutzerbefehl kann zwischen den Eingabemethoden umgeschaltet werden. Eine Identifizierung gegenüber dem Webserver erfolgt über die Übermittlung einer Telefonnummer.

Es ist daher die Aufgabe der vorliegenden Erfindung, ein Verfahren zur Steuerung einer interaktiven Multimedia-Webapplikation bereitzustellen, bei der neben der herkömmlichen Steuerung über Eingabegeräte auch eine Sprachsteuerung möglich ist, wobei mehrere Clients gleichzeitig mit der Webapplikation interagieren.

Zur Lösung dieser Aufgabe dienen die Merkmale des Anspruchs 1.

Erfindungsgemäß ist vorgesehen, dass ein Verfahren zur Steuerung einer interaktiven Multimedia-Webapplikation folgende Schritte aufweist:
- Ausführen einer interaktiven Multimedia-Webapplikation auf einem Webserver und Interaktion mit dem Webserver über einen Client, wobei der Client auf einem entfernt von dem Webserver angeordneten Client-device ausgeführt wird,
- Eingeben von Eingaben zur Steuerung der und/oder Interaktion mit der interaktiven Multimedia-Webapplikation in den Client, wobei über mit dem Client-device verbundene Eingabegeräte herkömmliche Benutzereingaben und über mindestens einen mit dem Client-device verbundenen Schallwandler Spracheingaben in den Client eingegeben werden,
- Übermittlung der herkömmlichen Benutzereingaben an den Webserver,
- Übermittlung der Spracheingaben an einen entfernt angeordneten Spracherkennungsserver,
- Spracherkennung der Spracheingaben zu Sprachbefehlen,
- Übermittlung der erkannten Sprachbefehle an einen Synchronisationsserver,
- Übermittlung der erkannten Sprachbefehle von dem Synchronisationsserver an den Webserver, wobei die Interaktion zwischen Client und Webserver und/oder die interaktive Multimedia-Webapplikation in Abhängigkeit von den erkannten Sprachbefehlen geändert wird.

Das erfindungsgemäße Verfahren ermöglicht in vorteilhafter Weise die Steuerung von interaktiven Multimedia-Webapplikationen auch über Spracheingaben. Dadurch, dass die Spracheingaben von dem Client-device, beispielsweise einem Desktop Computer oder Notebook, an einen entfernt angeordneten Spracherkennungsserver übermittelt werden, ist es nicht notwendig, auf dem Client-device eine Spracherkennungssoftware zu installieren. Dadurch muss der Benutzer keine aufwendigen Änderungen an seinem Client-device vornehmen, die einen Zeit- und Kostenaufwand mit sich führen oder zu Kompatibilitätsproblemen führen. Es muss lediglich der für die interaktive Multimedia-Webapplikation notwendige Client auf dem Client-device installiert sein. Durch das Vorsehen eines Spracherkennungsservers kann entsprechend den Anforderungen ein Server mit hoher Leistung vorgesehen sein, so dass eine sehr schnelle Spracherkennung erfolgen kann. Die Leistung der Steuerung der interaktiven Multimedia-Applikation ist daher nicht oder nur im geringen Maße von der Leistung des Client-device abhängig.

Dadurch, dass die herkömmlichen Benutzereingaben und die Spracheingaben, die die Steuerung der interaktiven Multimedia-Webapplikation bzw. die Interaktion mit der interaktiven Multimedia-Webapplikation durchführen, von dem Client bzw. Client-device an die entsprechenden Server übermittelt werden, beispielsweise über eine Internetverbindung, kann die Steuerung der interaktiven Multimedia-Webapplikation von nahezu jedem Client-device, der einen Schallwandler aufweist und mit dem Internet verbunden ist, vorgenommen werden.

Um die Spracheingaben bzw. den Audiodatenstrom einer Session zwischen dem Client und Webserver zur Ausführung der interaktiven Multimedia-Webapplikation zuzuordnen, erhalten die Spracheingaben bzw. der Audiodatenstrom von dem Webserver eine Kennzeichnung, die dem Client von dem Webserver mitgeteilt wird. Auf diese Weise wird sichergestellt, dass die aus den Spracheingaben bzw. dem Audiodatenstrom erzeugten Sprachbefehle der richtigen Session zugeordnet und somit nur die von dem Benutzer des entsprechenden Client-device eingegebenen Eingaben zur Steuerung der interaktiven Multimedia-Webapplikationen berücksichtigt werden oder an den Webserver geleitet werden.

Dabei ist über die Kennzeichnung des Audiodatenstroms eine Identifizierung der Spracheingaben, eine Zuordnung der Spracheingaben zu einer Interaktion zwischen dem Client und dem Webserver und/oder eine Verwaltung der erkannten Sprachbefehle auf dem Synchronisationsserver möglich, derart, dass eine Spracheingabe eindeutig einer Interaktionssession zwischen Client und Webserver zuordbar ist.

Der Synchronisationsserver kann die Session der interaktiven Multimedia-Webapplikation verwalten. Dabei kann der Webserver während der Session die Spracherkennung von dem Synchronisationsserver anfordern, der wiederum die erkannten Spracheingaben an den Webserver übermittelt. Durch das Vorsehen eines Synchronisationsservers besteht nicht die Notwendigkeit, dass der Webserver im großen Maße an die neue Steuerung angepasst ist.

Es muss lediglich sicher gestellt sein, dass der Webserver mit dem Synchronisationsserver verbunden ist und die erkannten Sprachbefehle annimmt und verarbeitet. Die erkannten Sprachbefehle können dabei in der Befehlsform der herkömmlichen Benutzereingaben vorliegen, so dass der Webserver lediglich einen weiteren Kanal zum Empfangen von Eingaben bzw. Befehlen aufweisen muss. Der Webserver führt die erkannten Sprachbefehle dann in gleicher Weise wie Befehle der herkömmlichen Benutzereingaben aus.

Die Schritte in dem erfindungsgemäßen Verfahren müssen nicht zwangsweise in der angegebenen Reihenfolge erfolgen. Selbstverständlich ist es möglich, dass einzelne Schritte gleichzeitig oder in einer umgekehrten Reihenfolge erfolgen. Beispielsweise können die Übermittlungen der herkömmlichen Benutzereingaben an Webserver und die Übermittlung der Spracheingaben an einen entfernt angeordneten Spracherkennungsserver gleichzeitig erfolgen.

Die Übermittlung von Daten oder eines Datenstroms an einen Server im Rahmen der Erfindung bedeutet nicht zwangsweise, dass die Daten direkt an den Server gesendet werden. Es besteht die Möglichkeit, dass andere Komponenten, wie beispielsweise weitere Server oder Adapter, zwischengeschaltet sind.

Der Spracherkennungsserver, der Synchronisationsserver und/oder Webserver können räumlich getrennt angeordnet sein.
In einer bevorzugten Ausführungsform ist vorgesehen, dass der Webserver ein Flashserver und die interaktive Multimedia-Webapplikation eine vektorbasierte Webapplikation ist.

Vektorbasierte Webapplikationen, wie beispielsweise eine Flashapplikation, haben sich als besonders vorteilhaft für die Programmierung von Multimedia-Inhalten auf Internetseiten erwiesen, sind weit verbreitet und erfreuen sich großer Beliebtheit. Das Bereitstellen einer Sprachsteuerung derartiger vektorbasierter Webapplikationen ist daher von besonderem Vorteil.

Es kann vorgesehen sein, dass die Spracheingabe über die interaktive Multimedia-Webapplikation erfolgt. Auf diese Weise besteht auf dem Client-device nicht die Notwendigkeit einer separaten Sprachübermittlungsanwendung. Die Spracheingabe kann somit über den auf dem Client-device ausgeführten Client, der mit der interaktiven Multimedia-Webapplikation auf dem Web-server kommuniziert, erfolgen. Dadurch ist das System weniger fehleranfällig, da keine unterschiedlichen Situationen bzw. Anwendungen gekoppelt werden müssen.

Insbesondere ist vorgesehen, dass die interaktive Multimedia-Webapplikation eine Flashapplikation ist und die herkömmlichen Benutzereingaben und die Spracheingaben über die Interaktion zwischen Client und Webserver an den Webserver übermittelt werden, wobei zwischen dem Client-device und dem Spracherkennungsserver eine Streamverbindung zur Übermittlung der Spracheingaben vom Client-device an den Spracherkennungsserver als Audiodatenstrom aufgebaut wird. Der Aufbau der Streamverbindung erfolgt vorzugsweise über den Webserver. Auf diese Weise ist eine Übermittlung der Spracheingaben auf eine besonders vorteilhafte Art und Weise möglich. Durch die Übermittlung der Spracheingaben zusammen mit den Benutzereingaben an den Webserver und den Aufbau einer Streamverbindung zur Übermittlung der Spracheingaben vom Client an den Spracherkennungsserver ist eine besonders schnelle Übermittlung der Eingaben möglich. Die herkömmlichen Benutzereingaben können beispielsweise über eine XMLSocket-Verbindung übermittelt werden.

Der Audiodatenstrom kann vor oder bei der Übermittlung an den Spracherkennungsservers extrahiert und/oder transkodiert werden. Dabei können die Audiodaten des Audiodatenstroms das Datenformat Nellymoser oder speex besitzen. Bei der Übermittlung des Audiodatenstroms von dem Webserver an den Spracherkennungsserver kann dem Spracherkennungsserver ein Mediaserver und/oder ein Transkoder vorgeschaltet sein, die die Extrahierung und/oder Transkodierung des Audiodatenstroms übernehmen.

Gemäß einem alternativen Verfahren kann vorgesehen sein, dass die Spracheingabe über Voice-over-IP erfolgt, wobei auf dem Client-device eine Voice-over-IP-Applikation ausgeführt ist, die in Datenverbindung mit dem Spracherkennungsserver steht. Da die Voice-over-IP-Technik eine sehr gut funktionierende Technik darstellt, ist die Verwendung einer derartigen Technik von Vorteil, da dabei auf ein etabliertes System zurückgegriffen werden kann.

Dabei kann vorgesehen sein, dass der Client eine Kennung der Voice-over-IP-Applikation an den Webserver übermittelt und der Webserver die Kennung einer Session zuordnet, wobei vorzugsweise die Kennung an den Synchronisationsserver übermittelt wird. Auf diese Weise können die über die Voice-over-IP-Applikation des Client-device an den Spracherkennungsserver und an den Synchronisationsserver übermittelten Daten eindeutig einer Session zugeordnet werden, so dass sicher gestellt ist, dass die von dem Benutzer in den Client-device eingegebenen Spracheingaben der richtigen Session zur Interaktion oder Steuerung der interaktiven Multimedia-Webapplikation zugeordnet werden.

Dabei kann ferner vorgesehen sein, dass ein Voice-over-IP-Adapter dem Spracherkennungsserver vorgeschaltet ist, der mit der Voice-over-IP-Applikation des Client-device in Verbindung steht und vorzugsweise die über die Voice-over-IP-Datenverbindung übermittelten Spracheingaben transkodiert.

Mit Hilfe des Voice-over-IP-Adapters kann eine Verbindung mit der Voice-over-IP-Applikation des Client in vorteilhafter Weise hergestellt werden, wobei durch die Transkodierung der Spracheingaben die über die Voice-over-IP-Verbindung übertragenen Spracheingaben in eine für den Spracherkennungsserver vorteilhafte Form umgewandelt werden können.

Dabei kann auch vorgesehen sein, dass der Synchronisationsserver den Voice-over-IP-Adapter steuert, derart, dass nur Datenverbindungen mit der Voice-over-IP-Applikation des Client-device zustande kommen.

Zur Steuerung der Datenverbindung kann beispielsweise die Kennung der Voice-over-IP-Applikation des Client-device genutzt werden.

Auf diese Weise kann sicher gestellt werden, dass nur über die Voice-over-IP-Applikation des Client-device eingegebene Spracheingaben an den Spracherkennungsserver und somit an den Synchronisationsserver und den Webserver übermittelt werden, so dass auch nur in das Client-device eingegebene Eingaben bei der Interaktionssession zwischen dem Client und dem Webserver berücksichtigt werden.

Dabei kann ferner vorgesehen sein, dass der Webserver die an den Webserver übermittelte Voice-over-IP-Kennung an den Synchronisationsserver übermittelt, derart, dass der Synchronisationsserver über den Voice-over-IP-Adapter eine Voice-over-IP-Verbindung mit dem Client-device herstellt. Auf diese Weise kann sicher gestellt sein, dass die Voice-over-IP-Verbindung von dem Webserver bzw. dem Synchronisationsserver gesteuert wird. Die Fehleranfälligkeit des Systems wird dadurch reduziert. Ferner wird die Gefahr der Manipulation verringert, die beispielsweise entstehen kann, indem eine Voice-over-IP-Applikation eines fremden Client-device eine Datenverbindung mit dem System aufbaut.

In dem erfindungsgemäßen Verfahren kann vorgesehen sein, dass die Spracherkennung der Spracheingaben in Abhängigkeit von der Interaktion des Clients mit dem Webserver bei der Ausführung der interaktiven Multimedia-Webapplikation erfolgt. Auf diese Weise kann beispielsweise die Art oder die Geschwindigkeit der Spracherkennung verändert werden, um eine reibungslose Funktion der Steuerung der interaktiven Multimedia-Webapplikation zu ermöglichen.

Im Folgenden wird unter Bezugnahme auf die beigefügten Figuren die Erfindung näher erläutert.

Es zeigen:
- Fig. 1: eine Prinzipskizze eines Systems zur Durchführung einer ersten Variante des erfindungsgemäßen Verfahrens und
- Fig. 2: eine Prinzipskizze eines weiteren Systems zur Ausführung einer alternativen Variante zu dem erfindungsgemäßen Verfahren.

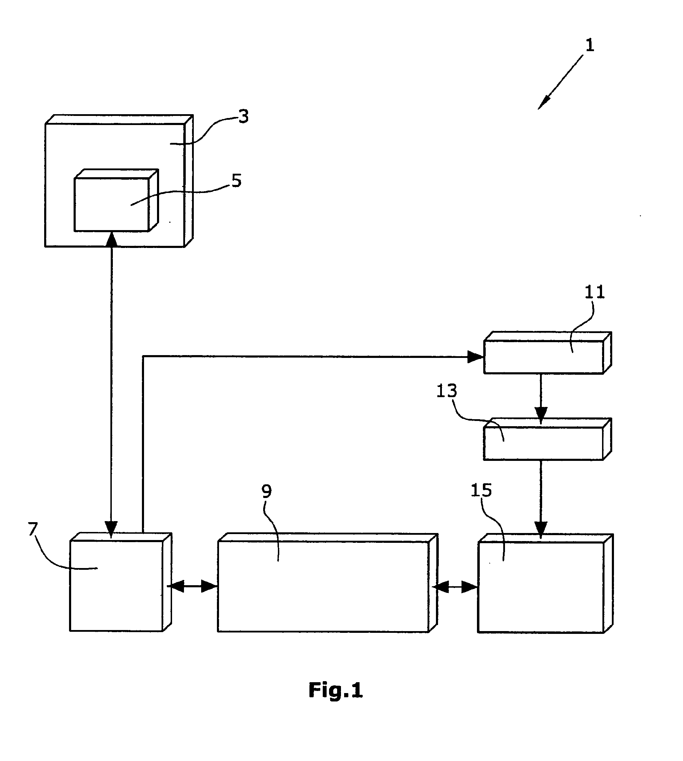

In Fig. 1 ist ein System 1 zur Durchführung einer ersten Variante eines erfindungsgemäßen Verfahrens schematisch dargestellt.

Das System besteht aus einem Client-device 3, einem von dem Client-device 3 entfernt angeordneten Webserver 7, einem von dem Client-device 3 entfernt angeordneten Spracherkennungsserver 15 sowie einem Synchronisationsserver 9.

Auf dem Client-device 3 ist ein Client 5 ausgeführt, der mit dem Webserver 7, beispielsweise einem Flashserver, in Verbindung steht und interagiert. Auf dem Webserver wird eine interaktive Multimedia-Webapplikation ausgeführt. Bei dieser interaktiven Multimedia-Webapplikation kann es sich um eine Flashapplikation handeln, wobei in diesem Fall der Client 5 als Flashclient ausgeführt ist.

An das Client-device 3 sind in Fig. 1 nicht dargestellte Eingabegeräte in Form von herkömmlichen Eingabegeräten, wie beispielsweise Tastatur oder Maus sowie Schallwandler, beispielsweise ein Mikrophon, für Spracheingaben angeschlossen. Über diese Eingabegeräte können herkömmliche Benutzereingaben zur Steuerung der interaktiven Multimedia-Webapplikation sowie Spracheingaben in den Client eingegeben werden. Die herkömmlichen Benutzereingaben sowie die Spracheingaben werden gemeinsam von dem Client an den Webserver übertragen. Die Übertragung erfolgt über die Verbindung zwischen Client-device und Webserver, beispielsweise eine Internetverbindung.

Der Webserver 7 nimmt die herkömmlichen Benutzereingaben sowie die Spracheingaben auf, trennt diese (falls notwendig) und leitet die Spracheingaben an den Sprach-server 15 weiter. Dabei ist vorgesehen , dass eine Streamverbindung zwischen Client und Webserver bzw. zwischen Webserver und Spracherkennungsserver aufgebaut wird und die Spracheingaben als Audiodatenstrom an den Spracherkennungsserver geleitet werden.

In dem in Fig. 1 dargestellten Ausführungsbeispiel ist dem Spracherkennungsserver 15 ein Mediaserver 11 und ein Transkoder 13 vorgeschaltet. Der Mediaserver 11 extrahiert dabei die Audiodaten aus den Datenpaketen oder dem Audiodatenstrom, die vom Webserver übermittelt werden. Der Transkoder transkodiert danach die Audiodaten in ein für den Spracherkennungsserver 15 geeignetes Datenformat.

In einer besonderen Variante des erfindungsgemäßen Verfahrens handelt es sich bei der interaktiven Multimedia-Webapplikation um eine Flashapplikation. In diesem Fall wird auf dem Client-device 3 der Client 5 als Flashclient ausgeführt. Der Webserver 7 ist als Flashserver ausgebildet und der Mediaserver 11 ist ein Flashmediaserver. Der Flashmediaserver kann vorzugsweise eine Flash-NetConnection mit NetStream von dem Flashclient annehmen. Der Flashserver stellt eine Streamverbindung zwischen dem Flashclient und dem Flashmediaserver her.

Dies erfolgt beispielsweise, indem sich der Flashclient beim Flashserver meldet und der Flashserver dann eine Verbindung zu dem Flashmediaserver herstellt. Dabei kann der Flashserver die Streamverbindung weiterleiten oder nur eine Vermittlung durchführen, so dass danach eine direkte Streamverbindung zwischen Flashclient und Flashmediaserver besteht.

Der Flashclient sendet die Spracheingaben als Audiodatenstrom zusammen mit den herkömmlichen Benutzereingaben, die in diesem Fall als Flashsteuerung vorliegen, an den Flashserver. Der Flashserver übermittelt den Audiodatenstrom als Streamverbindung weiter an den Flashmediaserver. Gegebenenfalls muss in dem Flashserver eine Trennung zwischen der Flashsteuerung und dem Audiodatenstrom vorgenommen werden. Der Flashmediaserver extrahiert die Audiodaten aus dem Audiodatenstrom und leitet sie an den Transkoder 13 weiter.

Vorzugsweise kann der Flashserver eine Flash-NetConnection mit NetStream und eine Flash XMLSocket-Verbindung vom Flashclient annehmen, so dass der Audiodatenstrom über die Flash-NetConnection und die Übermittlung herkömmlicher Benutzereingaben über die XMLSocket-Verbindung erfolgt.

Unabhängig von der Art der interaktiven Multimedia-Webapplikation ist es vorteilhaft, wenn die Audiodaten in einem für Spracherkennungssysteme üblichen Format vorliegen. Ein derartiges Format ist beispielsweise PCMA oder PCMU. Der Transkoder 13 kodiert die Audiodaten in ein entsprechendes Format.

Der Spracherkennungsserver 15 erkennt aus den als Audiodaten vorliegenden Spracheingaben Sprachbefehle und übermittelt diese an den Synchronisationsserver 9. Der Synchronisationsserver 9 leitet die erkannten Sprachbefehle an den Webserver 7 weiter, wobei die Interaktion zwischen Client und Webserver und/oder die interaktive Multimedia-Webapplikation in Abhängigkeit von den erkannten Sprachbefehlen geändert bzw. gesteuert wird.

Es kann vorgesehen sein, dass die Spracherkennung erst erfolgt, nachdem der Webserver 7 über den Synchronisationsserver 9 die Spracherkennung anfordert. Dazu kann vorgesehen sein, dass der Webserver 7 erst beim Vorliegen von Spracheingaben in den vom Client 5 übermittelten Daten eine Spracherkennung anfordert. Dadurch kann die interaktive Multimedia-Webapplikation auch ohne Sprachsteuerung in herkömmlicher Weise ausgeführt werden und erst bei Vorliegen einer Spracheingabe kommt es zu einer Spracherkennung des Spracherkennungsservers 15.

Um die Spracheingaben eindeutig einer Session zwischen Client 5 und Webserver 7 zuordnen zu können, wird dem Client 5 vom Webserver 7 für die Übertragung der Spracheingaben eine eindeutige Kennung mitgeteilt.

Die Kennung wird zusammen mit den Spracheingaben an den Mediaserver 11 übertragen und im weiteren Verlauf auch den erkannten Sprachbefehlen zugeordnet. Mit Hilfe der Kennung wird dann gewährleistet, dass der Webserver 7 nur die zu der Session zwischen Client 5 und Webserver 7 zugehörigen Sprachbefehle berücksichtigt oder übermittelt bekommt. Der Synchronisationsserver 9 kann dabei die Verwaltung der Spracheingaben und/oder der Sprachbefehle übernehmen. Dazu kann beispielsweise die Zuordnung eines im Mediaserver extrahierten Audiodatenstroms zu einer Session des Transkoders 13 sowie die Zuordnung der entsprechenden Audiodaten zu einem eigenen Eingangskanal im Spracherkennungsserver vorgenommen werden.

Durch das erfindungsgemäße Verfahren steht dem Benutzer des Client-devices 3 neben herkömmlichen Eingabemöglichkeiten nunmehr ein weiterer Eingabekanal für die Steuerung der interaktiven Multimedia-Webapplikation zur Verfügung.

In Abhängigkeit von dem Zustand der interaktiven Multimedia-Webapplikation und/oder den erkannten Sprachbefehlen ist es ferner möglich, dass die Spracherkennung im Spracherkennungsserver 15 angepasst wird. Auf diese Weise kann beispielsweise die Geschwindigkeit oder die Genauigkeit der Spracherkennung verändert werden.

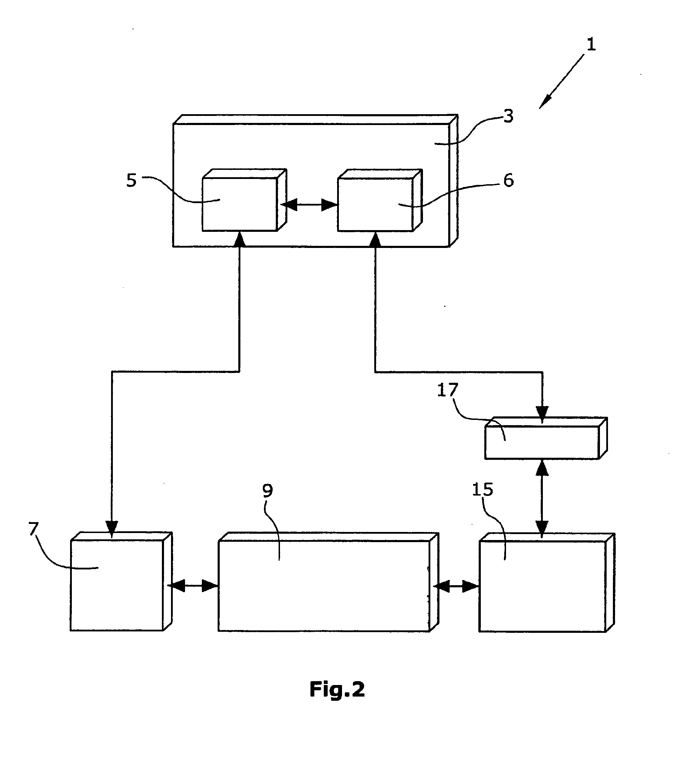

In Fig. 2 ist ein System für eine alternative Variante zu dem erfindungsgemäßen Verfahren dargestellt.

Das System besteht aus einem Client-device 3, das mit einem Webserver 7 in Verbindung steht. Der Webserver 7 steht in Verbindung mit einem Synchronisationsserver 9 und einem Spracherkennungsserver 15. Der Webserver 7, der Synchronisationsserver 9 und der Spracherkennungsserver 15 sind räumlich entfernt von dem Client-device angeordnet.

Auf dem Client-device 3 wird ein Client 5 ausgeführt, der mit dem Webserver 7 interagiert. Ferner wird auf dem Client-device 3 eine Voice-over-IP-Applikation 6 ausgeführt, die mit dem Spracherkennungsserver 15 in Verbindung steht.

Ein Benutzer des Client-device kann über herkömmliche Benutzereingaben, beispielsweise eine Tastatur oder eine Maus, Steuerbefehle in den Client eingeben, die an den Webserver 7 zur Steuerung der interaktiven Multimedia-Webapplikation übermittelt werden. Über einen an den Client-device 3 angeschlossenen Schallwandler, beispielsweise eine Mikrophon, kann der Benutzer ferner Spracheingaben in die Voice-over-IP-Applikation 6 eingeben, die an den Spracherkennungsserver 15 übermittelt werden. Die Übermittlung der herkömmlichen Benutzereingaben und die Übermittlung der Spracheingaben werden gemeinsam über die Datenverbindung des Client-device, beispielsweise eine Internetverbindung, übermittelt.

Ein Voice-over-IP-Adapter 17 ist dem Spracherkennungsserver 15 vorgeschaltet, der die Verbindung mit der Voice-over-IP-Applikation 6 des Client-device 3 erstellt.

Es kann ferner vorgesehen sein, dass der Voice-over-IP-Adapter 17 die von der Voice-over-IP-Applikation 6 übermittelten Spracheingaben in eine für den Spracherkennungsserver 15 geeignete Datenform überführt.

Herkömmliche Voice-over-IP-Applikationen weisen eine eindeutige Kennung auf. Um eine eindeutige Zuordnung von Spracheingaben zu einer Session zwischen Client 5 und Webserver 7 zu gewährleisten, kann daher vorgesehen sein, die Kennung der Voice-over-IP-Applikation des Client-device an den Client 5 zu übermitteln, der diese an den Webserver 7 weitergibt.

Die Übermittlung der Kennung von der Voice-over-IP-Applikation 6 an den Client 5 kann dabei automatisch oder durch Benutzereingabe in den Client erfolgen. Der Webserver 7 gibt die Kennung der Voice-over-IP-Applikation an den Synchronisationsserver 9 weiter, der den Voice-over-IP-Adapter 17 derart steuert, dass nur Verbindungen der Voice-over-IP-Applikation 6 des Client-device 3 angenommen werden.
Alternativ kann vorgesehen sein, dass der Synchronisationsserver 9 den Voice-over-IP-Adapter 17 derart steuert, dass dieser eine Verbindungsanfrage an die Voice-over-IP-Applikation 6 des Client-device 3 sendet.

Die über die Voice-over-IP-Verbindung übermittelten Spracheingaben werden von dem Spracherkennungsserver 15 als Sprachbefehle erkannt und an den Synchronisationsserver 9 weitergegeben. Der Synchronisationsserver 9 leitet die erkannten Sprachbefehle an den Webserver 7 weiter, so dass diese die interaktive Multimedia-Webapplikation verändern können.

Es kann vorgesehen sein, dass eine Spracherkennung durch den Spracherkennungsserver 15 erst nach Anforderung durch den Webserver 7 erfolgt. Dazu kann ferner vorgesehen sein, dass der Synchronisationsserver 9 dem Webserver 7 das Zustandekommen einer Verbindung zwischen der Voice-over-IP-Applikation 6 und dem Voice-over-IP-Adapter 17 meldet, so dass erst dann der Webserver 7 eine Spracherkennung anfordern kann.

Als Voice-over-IP-Applikation und Voice-over-IP-Verbindung kann beispielsweise SKYPE® verwendet werden.

Bei dem erfindungsgemäßen Verfahren kann die interaktive Multimedia-Webapplikation beispielsweise eine Flashapplikation sein, wobei der Client 5 in diesem Fall ein Flashclient und der Webserver ein Flashserver ist.

Bei dem erfindungsgemäßen Verfahren muss nicht zwangsläufig eine direkte Verbindung zwischen Client und Webserver vorliegen. Im Rahmen der Erfindung ist es auch möglich, dass ein weiterer Server zwischen dem Client und dem Flashserver zwischengeschaltet ist.

Beispielsweise ist es möglich, das erfindungsgemäße Verfahren als Dienstleistung für einen Kunden zur Verfügung zu stellen, wobei der Benutzer des Client-device zunächst auf die Internetseite des Kunden gelangt, über die er auf die auf dem Webserver 7 ausgeführte interaktive Multimedia-Webapplikation weitergeleitet wird. Dabei müssen der Webserver und der Server, auf dem die Internetseite des Kunden betrieben wird, nicht notwendigerweise eine Einheit bilden, sondern können auch räumlich entfernt voneinander angeordnet sein.

Vor dem Spracherkennungsserver kann ein Mediaserver und/oder ein Transkoder vorgeschaltet sein, der den Audiodatenstrom extrahiert und/oder transkodiert. Dabei kann ein Prozessor, beispielsweise ein Audio-Dynamikprozessor vorgesehen sein, der die Dynamik des in dem Audiodatenstrom enthaltenen Audiosignals verändert, so dass die Audiodatensignale eine kleinere Dynamik aufweisen. Das Signal kann dann auf den für den Spracherkennungsserver optimalen Pegel verstärkt werden. Auf diese Weise können die in den Schallwandler eingegebenen Spracheingaben, die häufig aufgrund der Qualität der Schallwandler beispielsweise an Computern oder sich ändernder Abstände des Benutzers von dem Schallwandler einen großen Pegelbereich besitzen, derart angepasst werden, dass sie optimal von dem Spracherkennungsserver verarbeitet werden können. Dabei ist es beispielsweise auch möglich, dass die Parameter für die Dynamikveränderung des Audiosignals in Abhängigkeit von der Erkennungsqualität der Spracheingaben in dem Spracherkennungsserver oder von einer Pegelmessung des Audiosignals angepasst werden.

Es kann vorgesehen sein, dass die Kennung des Audiodatenstroms während der Dauer einer Session gleich bleibt. Diese kann dann beispielsweise in dem Spracherkennungsserver als gültige Kennung gespeichert werden. Bei Beendigung der Session oder bei einem Abschalten der Spracherkennungsoption verliert die Kennung die Gültigkeit. Der Spracherkennungsserver kann somit Audiodatenströme mit einer nicht gültigen Kennung nicht akzeptieren und eine vorläufig aufgebaute Verbindung wird abgebaut. Auf diese Weise können sogenannte "denial of service"-Angriffe unterbunden werden. Die Aufgabe der Verwaltung der gültigen Kennungen kann auch ein dem Sprachserver vorgeschalteter Server übernehmen, so dass der Spracherkennungsserver nicht mit nicht gültigen Verbindungsversuchen belastet wird.

Der Synchronisationsserver kann bei der Verwaltung der Spracheingaben und herkömmlichen Benutzereingaben diese priorisieren. Dies kann beispielsweise über eine Listung der beiden Eingabearten erfolgen, die nach dem first-in-firstout Prinzip verarbeitet wird. Dadurch ist die Webapplikation stets in einem eindeutig definierten Zustand und Zustandsänderungen sind eindeutig entscheidbar. Von beispielsweise zwei kurz hintereinander erfolgte Eingaben in Form von einer Spracheingabe und einer herkömmlichen Benutzereingabe, die beide von einem Ausgangszustand eine unterschiedliche Zustandsänderung bewirken sollen, wird nur die erste verarbeitet. Die andere wird verworfen, da diese sich auf den nun nicht mehr vorhandenen Anfangszustand der Webapplikation bezieht. Es können auch Zustandsübergänge der Webapplikation vom Webserver durchgeführt werden, die Auswirkungen auf die multimediale Darstellung und die im Spracherkennungsserver benutzten Parameter haben, ohne dass eine Spracheingabe oder eine herkömmliche Benutzereingabe abgewartet werden muss.

Die Kommunikation zwischen Client, Webserver, Synchronisationsserver und Spracherkennungsserver verläuft in der Regel schneller, als die Wahrnehmung eines neuen Zustands durch den Benutzer dauert. Die Clients können so aufgebaut sein, dass es bei einem Zustandsübergang zu keinen für den Benutzer merklichen Unterbrechungen z.B. durch Kommunikation mit dem Webserver kommt.

Wird zur multimedialen Darstellung ein Flashclient verwendet, so kann davon ausgegangen werden, dass Zustandsänderungen, die vom Flashserver durchgeführt werden, auf dem Flashclient mit keiner vom Benutzer wahrnehmbaren Verzögerung umgesetzt werden. Dies ist dadurch möglich, dass die Verbindung zwischen Flashserver und Flashclient asynchron bidirektional aufgebaut ist. Der Flashserver muss also nicht auf eine Refresh-Anfrage durch den Flashclient und nicht auf einen bestimmten Zeitpunkt für die Kommunikation warten. Auch die Verbindungen zwischen Synchronisationsserver und Spracherkennungsserver sowie zwischen Synchronisationsserver und Flashserver können asynchron bidirektional aufgebaut sein.
Dadurch kommt es in der Regel zu keinen wahrnehmbaren Verzögerungen und es ist nicht erforderlich, dass der Flashserver während der Durchführung einer Session auf eine Rückmeldung eines anderen Systemelements zur Synchronisation der verschiedenen Eingabearten wartet.

## Patentansprüche

1. Verfahren zur Steuerung einer interaktiven Multimedia-Webapplikation mit folgenden Schritten:
Ausführen einer interaktiven Multimedia-Webapplikation auf einem Webserver (7) und Interaktion mit dem Webserver (7) über einen Client (5), wobei der Client (5) auf einem entfernt von dem Webserver (7) angeordneten Client-device (3) ausgeführt wird,
Eingeben von Eingaben zur Steuerung der und/oder Interaktion mit der interaktiven Multimedia-Webapplikation in den Client (5), wobei über mit dem Client-device (3) verbundene Eingabegeräte herkömmliche Benutzereingaben und über mindestens einen mit dem Client-device (3) verbundenen Schallwandler Spracheingaben in den Client (5) eingegeben werden,
Übermittlung der herkömmlichen Benutzereingaben an den Webserver (7),
Übermittlung der Spracheingaben an einen entfernt von dem Client-device (3) angeordneten Spracherkennungsserver (15) als Audiodatenstrom,
Spracherkennung der Spracheingaben zu Sprachbefehlen durch den Spracherkennungsserver (15),
Übermittlung der erkannten Sprachbefehle an einen Synchronisationsserver (4),
Übermittlung der erkannten Sprachbefehle von dem Synchronisationsserver (4) an den Webserver (7), wobei die Interaktion zwischen Client (5) und Webserver (7) und/oder die interaktive Multimedia-Webapplikation in Abhängigkeit von den erkannten Sprachbefehlen geändert oder gesteuert wird,
wobei der Synchronisationsserver eine Session der interaktiven Multimedia-Webapplikation verwaltet,
wobei der Audiodatenstrom von dem Webserver (7) eine Kennzeichnung erhält, die dem Client (5) vom Webserver (7) für die Übertragung der Spracheingaben mitgeteilt wird,
wobei über die Kennzeichnung des Audiodatenstroms eine Identifizierung der Spracheingaben, eine Zuordnung der Spracheingaben zu einer Interaktion zwischen Client (5) und Webserver (7) und/oder eine Verwaltung der erkannten Sprachbefehle auf dem Synchronisationsserver (9) erfolgt und eine Spracheingabe eindeutig einer Interaktionssession zwischen Client (5) und Webserver (7) zugeordnet wird.

2. Verfahren nach Anspruch 1, **dadurch gekennzeichnet, dass** der Webserver (7) ein Flashserver und die interaktive Multimedia-Webapplikation eine vektorbasierte Webapplikation ist.

3. Verfahren nach Anspruch 1 oder 2, **dadurch gekennzeichnet, dass** die Spracheingabe über die interaktive Multimedia-Webapplikation erfolgt.

4. Verfahren nach Anspruch 3, **dadurch gekennzeichnet, dass** die interaktive Multimedia-Webapplikation eine Flashapplikation ist und die herkömmlichen Benutzereingaben und die Spracheingaben über die Interaktion zwischen Client (5) und Webserver (7) an den Webserver (7) übermittelt werden, wobei zwischen dem Client-device (3) und dem Spracherkennungsserver (15), vorzugsweise über den Webserver (7), eine Streamverbindung zur Übermittlung der Spracheingaben vom Client-device (3) an den Spracherkennungsserver (15) als Audiodatenstrom aufgebaut wird.

5. Verfahren nach Anspruch 4, **dadurch gekennzeichnet, dass** der Audiodatenstrom vor oder bei der Übermittlung an den Spracherkennungsserver (15) extrahiert und/oder transkodiert wird.

6. Verfahren nach Anspruch 4 oder 5, **dadurch gekennzeichnet, dass** die Audiodaten des Audiodatenstroms das Datenformat Nellymoser oder speex besitzen.

7. Verfahren nach einem der Ansprüche 1 bis 6, **dadurch gekennzeichnet, dass** die Spracherkennung der Spracheingaben in Abhängigkeit von der Interaktion des Clients (5) mit dem Webserver (7) bei der Ausführung der interaktiven Multimedia-Webapplikation erfolgt.

8. Verfahren nach einem der Ansprüche 1 bis 7, **dadurch gekennzeichnet, dass** die Spracherkennung erst nach Anforderung durch den Webserver (7) erfolgt.

## Claims

1. Method for controlling an interactive multimedia web application, comprising the following steps:
executing an interactive multimedia web application on a web server (7) and interaction with the web server (7) via a client (5), the client (5) being executed on a client device (3) arranged remote from the web server (7),
entering, into the client (5), inputs for control of and/or interaction with the interactive multimedia web application, wherein conventional user inputs are entered into the client (5) via input devices connected to the client device (3), and speech inputs are entered into the client (5) via at least one sound transformer connected to the client device (3),
transmitting the conventional user inputs to the web server (7),
transmitting the speech inputs as an audio data flow to a speech recognition server (15) arranged remote from the client device (3),
speech recognition of the speech inputs as speech commands by the speech recognition server (15),
transmitting the recognized speech commands to a synchronization server (4),
transmitting the recognized speech commands from the synchronization server (4) to the web server (7), wherein the interaction between the client (5) and the web server (7) and/or the interactive multimedia web application is changed or controlled in dependence on the recognized speech commands,
wherein the synchronization server manages a session of the interactive multimedia web application,
wherein the audio data flow receives an identification from the web server (7) that is communicated to the client (5) from the web server (7) for transmission of the speech inputs,
wherein, via the identification of the audio data flow, identification of the speech inputs, assignment of the speech inputs to an interaction between the client (5) and the web server (7) and/or management of the recognized speech commands are performed on the synchronization server (9), and a speech input is unambiguously assigned to an interaction session between the client (5) and the web server (7).

2. The method according to claim 1, **characterized in that** the web server (7) is a flash server and the interactive multimedia web application is a vector-based web application.

3. The method according to claim 1 or 2, **characterized in that** the speech input is performed via the interactive multimedia web application.

4. The method according to claim 3, **characterized in that** the interactive multimedia web application is a flash application and that the conventional user inputs and the speech inputs are transmitted to the web server (7) via the interaction between the client (5) and the web server (7), wherein, between the client device (3) and the speech recognition server (15), preferably via the web server (7), a stream connection is built up for transmitting the speech inputs from the client device (3) to the speech recognition server (15) as an audio data flow.

5. The method according to claim 4, **characterized in that** the audio data flow is extracted and/or transcoded prior to, or during, transmission to the speech recognition server (15).

6. The method according to claim 4 or 5, **characterized in that** the audio data of the audio data flow have the data format Nellymoser or speex.

7. The method according to any one of claims 1 to 6, **characterized in that** the speech recognition of the speech inputs is performed in dependence on the interaction of the client (5) with the web server (7) while performing the interactive multimedia web application.

8. The method according to any one of claims 1 to 7, **characterized in that** the speech recognition is performed only after being requested by the web server (7).

## Revendications

1. Procédé de commande d'une application web multimédia interactive comprenant les étapes suivantes :
- exécution d'une application web multimédia interactive sur un serveur web (7) et interaction avec le serveur web (7) via un client (5), le client (5) étant réalisé sur un dispositif client (3) installé à distance du serveur web (7),
- saisie de données pour la commande de et/ou l'interaction avec l'application web multimédia interactive dans le client (5), des données d'utilisateur courantes étant entrées par l'intermédiaire d'organes d'entrée reliés au dispositif client (3) et des données vocales étant entrées dans le client (5) par l'intermédiaire d'au moins un transducteur acoustique relié au dispositif client (3),
- transmission des données d'utilisateur courantes au serveur web (7),
- transmission des données vocales à un serveur de reconnaissance vocale (15) installé à distance du dispositif client (3) en tant que flux de données audio,
- reconnaissance vocale des données vocales comme instructions vocales par le serveur de reconnaissance vocale (15),
- transmission des instructions vocales reconnues à un serveur de synchronisation (4),
- transmission des instructions vocales reconnues depuis le serveur de synchronisation (4) au serveur web (7), l'interaction entre le client (5) et le serveur web (7) et/ou l'application web multimédia interactive étant modifiée ou commandée en fonction des instructions vocales reconnues,
le serveur de synchronisation gérant une session de l'application web multimédia interactive,
le flux de données audio recevant de la part du serveur web (7) une caractérisation qui est communiquée au client (5) par le serveur web (7) pour le transfert des données vocales,
une identification des données vocales, une affectation des données vocales à une interaction entre le client (5) et le serveur web (7) et/ou une gestion des instructions vocales reconnues sur le serveur de synchronisation (9) s'opérant par l'intermédiaire de la caractérisation du flux de données audio et une saisie vocale étant affectée de manière univoque à une session d'interaction entre le client (5) et le serveur web (7).

2. Procédé selon la revendication 1, **caractérisé en ce que** le serveur web (7) est un serveur flash et l'application web multimédia interactive est une application web à base de vecteurs.

3. Procédé selon la revendication 1 ou 2, **caractérisé en ce que** la donnée vocale est entrée par l'intermédiaire de l'application web multimédia interactive.

4. Procédé selon la revendication 3, **caractérisé en ce que** l'application web multimédia interactive est une application flash et les données d'utilisateur courantes et les données vocales sont transmises au serveur web (7) par l'intermédiaire de l'interaction entre le client (5) et le serveur web (7), une connexion continue (streaming) étant établie entre le dispositif client (3) et le serveur de reconnaissance vocale (15), de préférence par l'intermédiaire du serveur web (7), pour la transmission des données vocales depuis le dispositif client (3) au serveur de reconnaissance vocale (15) en tant que flux de données audio.

5. Procédé selon la revendication 4, **caractérisé en ce que** le flux de données audio est extrait et/ou transcodé avant ou pendant la transmission au serveur de reconnaissance vocale (15).

6. Procédé selon la revendication 4 ou 5, **caractérisé en ce que** les données audio du flux de données audio sont au format de données Nellymoser ou Speex.

7. Procédé selon l'une des revendications 1 à 6, **caractérisé en ce que** la reconnaissance vocale des données vocales se produit en fonction de l'interaction du client (5) avec le serveur web (7) lors de l'exécution de l'application web multimédia interactive.

8. Procédé selon l'une des revendications 1 à 7, **caractérisé en ce que** la reconnaissance vocale ne se produit qu'après la demande via le serveur web (7).
